# EUROPEAN PATENT APPLICATION

(11) **EP 2 640 157 A1**
(43) Date of publication of application: **18.09.2013**
(21) Application number: 12290094.7
(22) Date of filing: 16.03.2012
(51) Int. Cl.: H04W 84/04, H04W 60/04

(54) **A femtocell base station and a method of registering a user terminal at a femtocell base station**

(71) Applicant: Alcatel Lucent, 75007 Paris (FR)
(72) Inventor: Freynet, Marc, Swindon, SN1 3ED Wiltshire (GB); Putman, Tony, Chippenham, SN15 5AQ, Wiltshire (GB)
(74) Representative: Sarup, David Alexander

(57) **Abstract**

A method is provided of registering a user terminal at a femtocell base station by a user of the user terminal noting some information displayed on the femtocell base station and using the user terminal to send to said user terminal a short message service, SMS, message including said information. The femtocell base station receives the SMS message, determining that the SMS message includes said information and dependent upon said determination stores an identifier of the user terminal in the list of registered user terminals of the femtocell base station.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug-and play deployment by users, for example in which femto base stations may integrate themselves into an existing macrocell network so as to connect to the core network of the macrocell network.

Femtocell base stations are intended primarily for users belonging to a particular home or office. Femtocell base stations may be closed access, open access, or semi-open access. In femtocell base stations that are closed access, access is restricted to only registered users, for example family members or particular groups of employees. In femtocell base stations that are open access, other users may also use the femtocell base station whether or not registered. In semi-open access, unregistered users may use the femto subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations are sometimes referred to as femtos.

In some known closed access femto networks it is possible for a femto owner or other home user to register their mobile terminal with the femto by accessing a website on a webserver. In one example, the femto is a third generation femto in accordance with the Third Generation Partnership Project, 3GPP, and the user provides their own telephone number to the website, from where the webserver queries a Home Location Register (HLR) that stores relations between telephone numbers and International Mobile Subscriber Identities (IMSIs), to provide the IMSI of the user terminal. The webserver then forwards the IMSI and the Femto Serial Number (FSN) also provided by the user, to a femto management server (FMS). The FMS sends an access control list (ACL) Update message to the femto. This message includes the FSN and IMSI. In the femto, the access control list is updated to add the IMSI of that user as a registered user. Thereafter this user is recognised as one authorised to use the femto.

In open access femto systems, there is no need to register a user terminal at a femto in order for the user terminal to make use of the femto.

### Summary

The inventors realised that the webserver used in the closed access approach was complex, but open access is not always desirable because a femto owner can be in a situation of both paying for providing the femto and associated backhaul but be unable to use these due to calls being made by other users who are not related to the femto owner. In other words, in an open access femto, the femto owner or other home user suffers a possible disadvantage of having no priority of access to their own femto, as compared to other users.

The reader is referred to the appended independent claims. Some preferred features are laid out in the dependent claims.

An example of the present invention is a method of registering a user terminal at a femtocell base station by a user of the user terminal noting some information displayed on the femtocell base station and using the user terminal to send to said user terminal a short message service, SMS, message including said information, the femtocell base station receiving the SMS message, determining that the SMS message includes said information and dependent upon said determination storing an identifier of the user terminal in the list of registered user terminals of the femtocell base station.

Some preferred embodiments provide a secure way to register a user terminal to a femto without the need to deploy a complex back-office webserver. In these embodiments, the user's involvement is simple and effective.

Preferred embodiments enable femtos to be deployed in a semi-open access mode where registered users are prioritised, but without a complex web server being required in order to register a user terminal. Efficient coverage can be provided to the registered users when they have calls, whilst unregistered users can be supported by the femto and its associated backhaul at other times when capacity permits.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating in more detail the femtocell base station deployment shown in Figures 1 and 2,
Figure 4 is a diagram illustrating a femtocell base station shown in Figure 3, and
Figure 5 is a message sequence diagram showing example messaging between the user terminal, the femtocell base station and the core network shown in Figure 1.

### Detailed Description

We now describe a network including femtocell base stations then look in greater detail at the femtocell base station and its operation in registering suitable user terminals as home users.

### Network

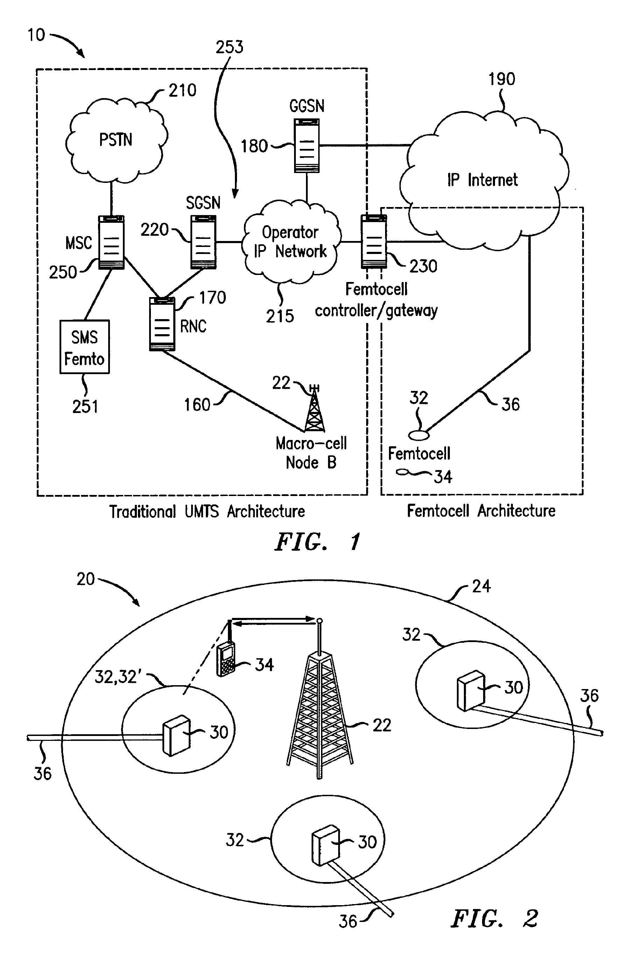

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The MSC 250 is connected to a Short Message Service, SMS, centre 251. The femtocell controller/gateway 230 is connected via the Internet 190 to the femtocell base stations 30. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

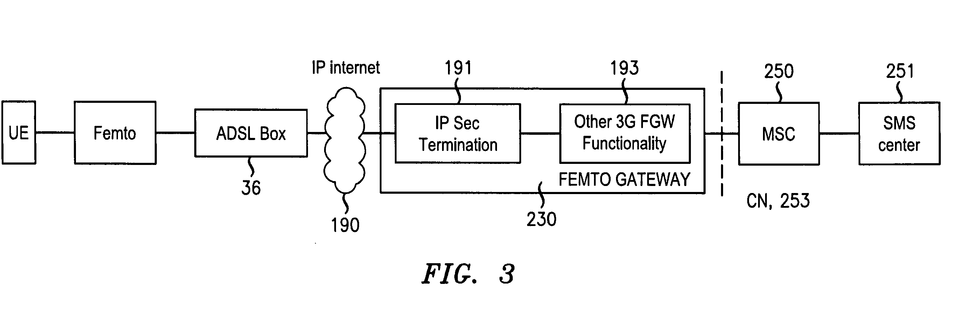

As shown in Figure 3, the user terminal 34 is connected to the femtocell base station 30 which is connected via the backhaul 36 to the packet-switched core (Internet) 190 which is connected to the femtocell gateway 230. The femtocell gateway 230 includes an IPsecurity termination (IP Sec) 191 and other Third Generation (3G) femtocell gateway functions 193. The femtocell gateway is connected to the core network 253, specifically the Mobile Switching Centre (MSC) 250 and Short Message Service (SMS) centre 251.

### Femtocell base station

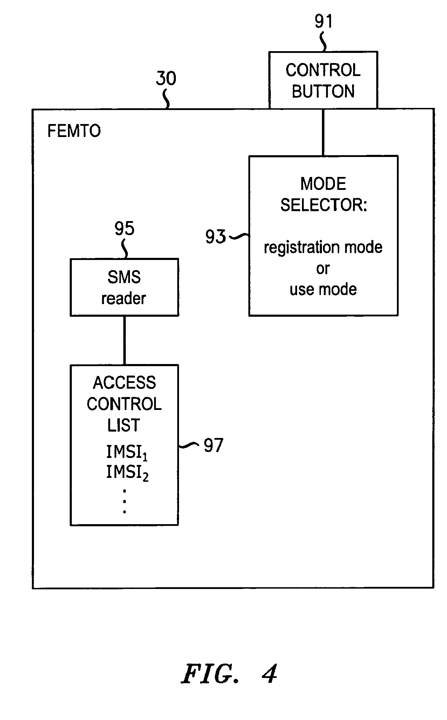

As shown in Figure 4, the femtocell base station 30 includes a manual control button 91 connected to a mode selector 93 enabling selection by the user in the home between a registration mode and a normal use mode. The femtocell base station 30 includes an SMS reader 95 and an access control list 97. The access control list 97 is a list of International Mobile Subscriber Identity (IMSI) of each user terminal registered to use the femtocell base station.

### Operation

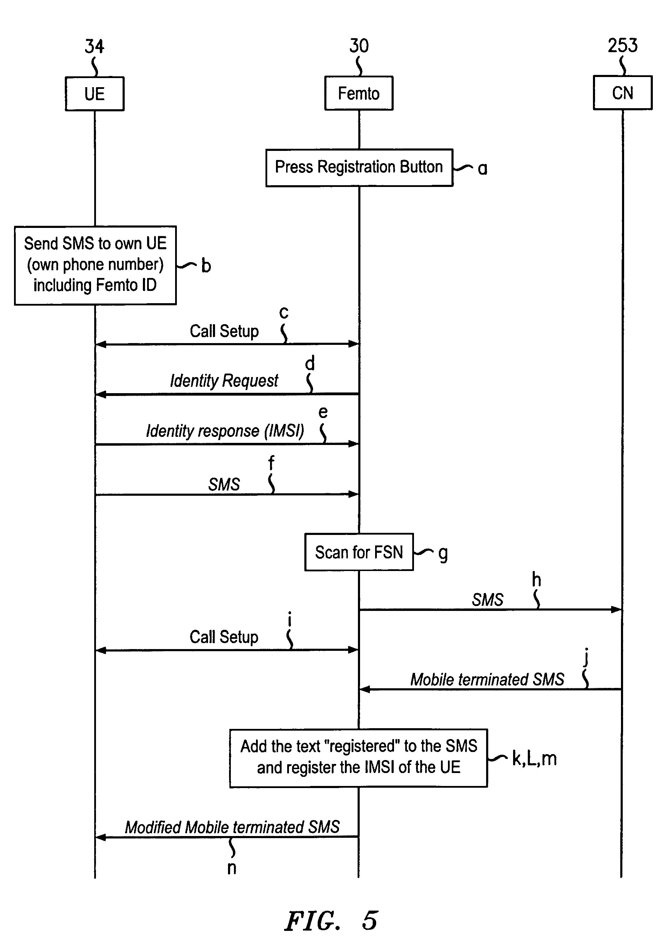

As shown in Figure 5, the user presses (step a) the button 91 on the femtocell base station 30 in order to put the femtocell base station 30 into registration mode ready to register the user's terminal. The user then controls his user terminal 34 to send (step b) an SMS message to himself, namely to his own user terminal's phone number. The SMS message includes the Factory Serial Number (FSN, not shown) of the femtocell base station that the user reads from the label (not shown) on the outer casing (not shown) of the femtocell base station 30. This FSN may be considered a femtocell base station identifier (FemtoID).

The SMS call in then setup (step c) between the femtocell base station 30 and the user terminal 34. The femtocell base station 30 sends (step d) a request to the user terminal for the IMSI of the user terminal. The user terminal responds (step e) with the IMSI.

The user terminal then sends (step f) the SMS message to the femtocell base station 30 where its SMS reader 95 scans (step g) the content of the SMS message to check for the FSN in plain text. Finding the FSN primes the femto to expect to receive an SMS message for the purpose of user terminal registration shortly thereafter. The femto forwards (step h) the SMS message to the core network 253. The SMS call between the user terminal 34 and femto 30 is then released (step i).

After a few seconds, the core network 253 establishes (step j) the mobile-terminated SMS call. The femto 30 reads (step k) the IMSI in the SMS message and stores (step *l*) that IMSI in its access control list 97 and modifies (step m) the incoming mobile-terminated SMS message by adding plain text information to indicate that the phone is now registered, for example by adding the plain text "registered" to the SMS message. The modified SMS is then forwarded (step n) to the user terminal 34 and displayed there.

The user terminal is now registered with the femto 30 so will be given higher priority of access to the femto than unregistered users.

It will be understood that this approach involves a real home user who has physical access to the femto both manually pressing a button on the casing of the femto and being able to read the Femto Serial Number on the casing of the femto. This ensures that genuine home users can readily register with the femto whilst other parties, for example users without physical access to the femto's location, are excluded from registering.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of registering a user terminal at a femtocell base station by:
a user of the user terminal noting some information displayed on the femtocell base station and using the user terminal to send to said user terminal a short message service, SMS, message including said information;
the femtocell base station receiving the SMS message, determining that the SMS message includes said information, and dependent upon said determination storing an identifier of the user terminal in the list of registered user terminals of the femtocell base station.

2. A method according to claim 1, in which the information is a Femto Serial Number, FSN.

3. A method according to claim 1 or claim 2, in which dependent upon the determination by the femtocell base station that the SMS message, which is received from the user terminal, includes said information, the femtocell base station inspects the corresponding mobile-terminated SMS message to obtain the identifier for storage.

4. A method according to claim 3, in which the femtocell base station modifies the mobile-terminated SMS message by adding a text string for display by the user terminal indicating that the user terminal has been registered by the femtocell base station.

5. A method according to any preceding claim, in which the identifier is the International Mobile Subscriber Identity, IMSI, of the user terminal.

6. A method according to any preceding claim, in which a control switch is manually controlled by the user to select a registration mode in which the femtocell base station is configured to determine that the received SMS message includes said information and is configured dependent upon said determination to store the identifier of the user terminal in the list of at least one registered user terminals.

7. A femtocell base station configured to receive a short message service, SMS, message from a user terminal, the message including information noted by a user of the user terminal as displayed on the femtocell base station;
the femtocell base station being configured to determine that the received SMS message includes said information and being configured dependent upon said determination to store an identifier of the user terminal in a list of at least one registered user terminals.

8. A femtocell base station according to claim 6, in which the information is a Femto Serial Number, FSN.

9. A femtocell base station according to claim 6 or claim 7, in which the femtocell base station is configured to inspect a mobile-terminated SMS message to obtain the identifier for storage, dependent upon the determination by the femtocell base station that the SMS message which is received from the user terminal includes said information, the mobile-terminated SMS message corresponding to the SMS message which is received from the user terminal.

10. A femtocell base station according to claim 9, in which the femtocell base station is configured to modify the mobile-terminated SMS message by adding a text string for display by the user terminal indicating that the user terminal has been registered by the femtocell base station.

11. A femtocell base station according to any of claims 6 to 10, in which the identifier is the International Mobile Subscriber Identity, IMSI, of the user terminal.

12. A femtocell base station according to any of claims 6 to 11, including a control switch that is manually controllable by the user to select a registration mode in which the femtocell base station is configured to determine that the received SMS message includes said information and is configured dependent upon said determination to store the identifier of the user terminal in the list of at least one registered user terminals.

## Amended claims

### Amended claims in accordance with Rule 137(2) EPC.

**1.** A method of registering a user terminal (34) at a femtocell base station (30) that allows access to unregistered users by:
a user of the user terminal noting some information displayed on the femtocell base station and using the user terminal to send (Fig 5:b) to said user terminal a short message service, SMS, message including said information;
the femtocell base station receiving the SMS message, determining (Fig 5:g) whether the SMS message includes said information, and dependent upon said determination being that the SMS message includes said information, storing (Fig 5:1) an identifier of the user terminal in the list of registered user terminals of the femtocell base station.

**2.** A method according to claim 1, in which the information is a Femto Serial Number, FSN.

**3.** A method according to claim 1 or claim 2, in which dependent upon the determination by the femtocell base station that the SMS message, which is received from the user terminal, includes said information, the femtoecll base station inspects (Fig 5:k) the corresponding mobile-terminated SMS message to obtain the identifier for storage.

**4.** A method according to claim 3, in which the femtocell base station modifies (Fig 5:m) the mobile-terminated SMS message by adding a text string for display by the user terminal indicating that the user terminal has been registered by the femtocell base station.

**5.** A method according to any preceding claim, in which the identifier is the International Mobile Subscriber Identity, IMSI, of the user terminal.

**6.** A method according to any preceding claim, in which a control switch (91,93) is manually controlled by the user to select a registration mode in which the femtocell base station is configured to determine that the received SMS message includes said information and is configured dependent upon said determination to store (97) the identifier of the user terminal in the list of at least one registered user terminals.

**7.** A femtocell base station (30) configured to receive a short message service, SMS, message from a user terminal, the message including information noted by a user of the user terminal as displayed on the femtocell base station;
the femtocell base station being configured to determine (Fig 5:g) whether the received SMS message includes said information and being configured dependent upon said determination being that the received SMS message includes said information, to store (Fig 5:1) an identifier of the user terminal in a list of at least one registered user terminals.

**8.** A femtocell base station according to claim 6, in which the information is a Femto Serial Number, FSN.

**9.** A femtocell base station according to claim 6 or claim 7, in which the femtocell base station is configured to inspect (Fig 5:k) a mobile-terminated SMS message to obtain the identifier for storage, dependent upon the determination by the femtocell base station that the SMS message which is received from the user terminal includes said information, the mobile-terminated SMS message corresponding to the SMS message which is received from the user terminal.

**10.** A femtocell base station according to claim 9, in which the femtocell base station (30) is configured to modify (Fig 5:m) the mobile-terminated SMS message by adding a text string for display by the user terminal indicating that the user terminal has been registered by the femtocell base station.

**11.** A femtocell base station according to any of claims 6 to 10, in which the identifier is the International Mobile Subscriber Identity, IMSI, of the user terminal.

**12.** A femtocell base station according to any of claims 6 to 11, including a control switch (91,93) that is manually controllable by the user to select a registration mode in which the femtocell base station is configured to determine that the received SMS message includes said information and is configured dependent upon said determination to store (97) the identifier of the user terminal in the list of at least one registered user terminals.
